# FASCICULE DE BREVET EUROPEEN

(11) **EP 1 775 823 B1**
(45) Date de publication et mention de la délivrance du brevet: **14.12.2016**
(21) Numéro de dépôt: 06301032.6
(22) Date de dépôt: 10.10.2006
(51) Int. Cl.: H02K 3/28, H02K 17/14, H02P 25/18

(54) **Machine électrique**
Elektrische Maschine
Electrical machine

(30) Priorité: 12.10.2005 FR 0553103; 14.12.2005 FR 0553874
(43) Date de publication de la demande: 18.04.2007
(73) Titulaire: Moteurs Leroy-Somer, 16915 Angouleme Cedex 9 (FR)
(72) Inventeur: Vincent, Benoît, 69360, Ternay (FR)
(74) Mandataire: Nony

(56) Documents cités:
- EP-A- 0 923 192
- EP-A- 1 255 345
- EP-A1- 0 547 243
- FR-A1- 2 642 893
- US-A- 4 363 985
- US-A- 5 619 085

## Description

La présente invention concerne les moteurs électriques alimentés par un courant alternatif polyphasé, notamment triphasé.

Le brevet US 4 363 985 divulgue une machine électrique permettant de modifier les caractéristiques du bobinage d'un moteur en utilisant un système de commutation permettant de fonctionner selon une configuration triangle dans laquelle dans chacune des trois phases, les éléments de bobinage sont tous montés en série et une configuration étoile dans laquelle dans chacune des trois phases, les éléments de bobinage sont tous montés en parallèle. D'autres modes de réalisation sont aussi présentés comme par exemple des configurations dans lesquelles les éléments de bobinage de chaque phase comportent des éléments en série et en parallèle.

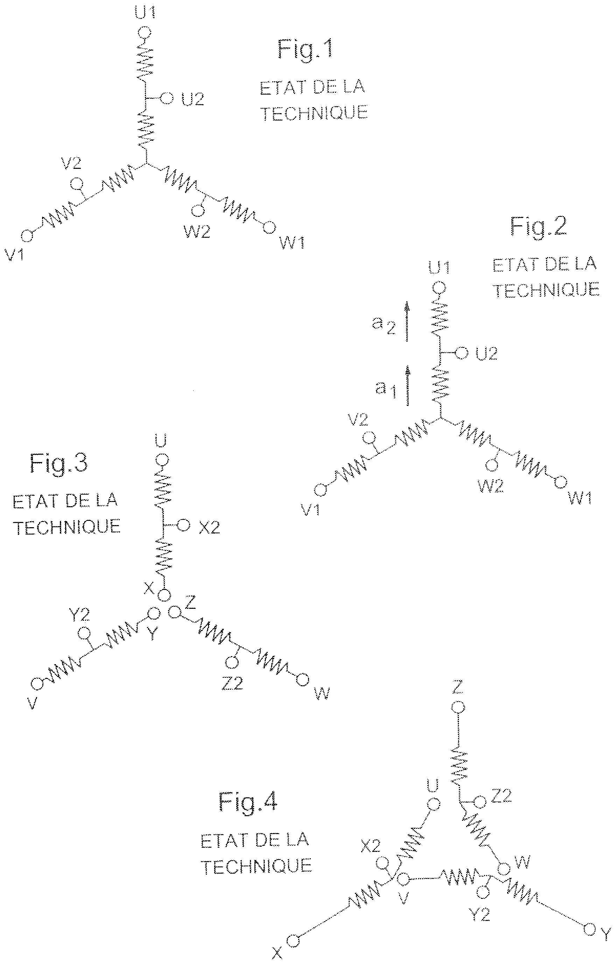

Le brevet EP 0 923 192 divulgue des procédés pour changer les caractéristiques d'un moteur en modifiant la configuration d'éléments de bobinage. Un premier exemple est reproduit aux figures 1 et 2.

Selon une première configuration, illustrée à la figure 1, correspondant aux basses vitesses, tous les éléments de bobinage d'une phase sont alimentés en série, à partir des points d'alimentation U1, V1et W1.

Selon une deuxième configuration, illustrée à la figure 2, correspondant aux hautes vitesses, les éléments de bobinage reliés à un point neutre sont alimentés à partir des points intermédiaires U2, V2 et W2.

Un deuxième exemple est reproduit sur les figures 3 et 4. L'alimentation se fait dans cet exemple à partir des points intermédiaires X2, Y2 et Z2 aux hautes vitesses, selon une configuration triangle.

Dans ces exemples, les éléments de bobinage non alimentés induisent une surtension aux bornes non connectées qui s'ajoute à la tension induite sur les éléments de bobinage alimentés.

Cette surtension impose de limiter le nombre de spires des éléments de bobinage à la valeur admissible compte tenu de l'isolation.

Le brevet EP 0 923 192 divulgue une solution à ce problème consistant à réaliser tous les éléments de bobinage avec le même nombre de spires et à faire fonctionner le moteur selon quatre modes de fonctionnement, correspondant à quatre agencements différents, à savoir :
- un agencement dit hautes vitesses avec configuration en triangle et éléments de bobinage de chaque phase en parallèle,
- un agencement dit intermédiaire hautes vitesses avec configuration étoile et éléments de bobinage de chaque phase en parallèle,
- un agencement dit intermédiaire basses vitesses avec configuration triangle et éléments de bobinage de chaque phase en série,
- un agencement dit basses vitesses avec configuration étoile et éléments de bobinage de chaque phase en série.

La solution proposée dans le brevet EP 0 923 192 n'offre pas entière satisfaction. La commutation d'un agencement à un autre entraîne en effet des changements de la résistance de chaque phase, ce qui occasionne une modification des pertes par effet Joule.

Il peut en résulter des variations de température non souhaitables, avec des phases de fonctionnement à chaud et d'autres à une température plus basse, où la machine peut difficilement maintenir son niveau d'isolation dans le temps, étant par exemple plus sensible à l'humidité.

La demande EP 0 547 243 divulgue un système de commutation pour machine asynchrone comportant trois commutateurs qui sont sélectivement commandés en mode passant selon la plage de vitesse du moteur.

Il existe un besoin pour bénéficier d'une machine électrique pouvant fonctionner sur une plage de vitesses relativement grande et d'une manière fiable, éventuellement simplifiée.

Par « machine », il faut comprendre de façon générale non seulement la partie tournante mais également l'électronique et l'électromécanique de commande de la partie tournante, entre autres.

Il existe également un besoin pour remédier aux inconvénients précités de l'art antérieur.

L'invention vise notamment à répondre à tout ou partie de ces besoins.

L'invention a pour objet une machine électrique polyphasée selon la revendication 1.

Grâce à l'invention, la machine électrique peut fonctionner sur une plage de vitesses relativement grande, par exemple avec une puissance sensiblement constante.

L'invention peut permettre d'éviter de générer une surtension lorsque seulement une partie des éléments de bobinage est alimentée.

La machine peut comporter au moins un point intermédiaire situé entre deux éléments consécutifs du bobinage d'une phase et au moins un premier interrupteur entre le point intermédiaire et l'un des éléments de bobinage et au moins un deuxième interrupteur relié au point intermédiaire et à une entrée de l'alimentation. Dans un exemple de mise en ouvre de l'invention, lorsque le premier interrupteur est ouvert, le deuxième est fermé, et inversement et chaque phase peut n'être associée qu'au premier et au deuxième interrupteurs.

Dans un exemple de mise en oeuvre de l'invention, le système de commutation permet de commuter les éléments de bobinage selon l'une quelconque des configurations suivantes :
- une configuration étoile dans laquelle les éléments de bobinage de chaque phase sont alimentés en série,
- une configuration triangle dans laquelle les éléments de bobinage de chaque phase sont alimentés en série,
- une configuration étoile dans laquelle une partie seulement des éléments de bobinage de chaque phase est alimentée,
- une configuration triangle dans laquelle une partie seulement des éléments de bobinage de chaque phase est alimentée.

Dans un exemple de réalisation, chaque phase de la machine électrique peut comporter exactement deux éléments de bobinage.

Les éléments de bobinage de chaque phase peuvent avoir le même nombre de spires ou non.

La machine peut comporter au moins un capteur, par exemple optoélectronique, permettant d'effectuer une lecture de la vitesse de rotation de son rotor.

Dans un exemple de mise en oeuvre de l'invention, la machine électrique est une machine asynchrone pilotée par un variateur de fréquence.

Selon un exemple de réalisation, le système de commutation comporte des interrupteurs électroniques de puissance, à semi-conducteurs, ce qui peut augmenter la rapidité des commutations.

Lors de la phase de démarrage, les éléments de bobinage peuvent être agencés en série selon une configuration étoile.

Selon un autre de ses aspects, l'invention a pour objet un procédé d'alimentation d'une machine telle que définie précédemment, comportant les étapes consistant à :
- faire d'abord fonctionner la machine jusqu'à une première vitesse de commutation, tous les éléments de bobinage de chaque phase étant alimentés, par exemple selon une configuration étoile avec tous les éléments de bobinage pour chaque phase en série,
- commuter, lorsque la vitesse dépasse la première vitesse de commutation, les éléments de bobinage de manière à n'alimenter qu'une partie seulement des éléments de bobinage pour chaque phase.

La première vitesse de commutation est par exemple choisie de manière à ce que le flux dans la machine soit sensiblement moitié moindre que le flux nominal, lorsque cette première vitesse de commutation est sur le point d'être atteinte.

La première vitesse de commutation vaut par exemple sensiblement le double de la vitesse de base. Le flux est alors par exemple compris entre 0,4 et 0,6 fois le flux nominal.

Selon un autre exemple de mise en oeuvre de l'invention, le procédé comporte les étapes consistant à :
- faire fonctionner la machine jusqu'à une première vitesse de commutation avec les éléments de bobinage de chaque phase reliés électriquement en série selon une configuration étoile et tous alimentés,
- à partir de la première vitesse de commutation et jusqu'à une deuxième vitesse de commutation, faire fonctionner la machine avec les éléments de bobinage reliés électriquement en série selon une configuration triangle,
- à partir de la deuxième vitesse de commutation et jusqu'à une troisième vitesse de commutation, faire fonctionner la machine en alimentant une partie seulement des bobinages par phase, selon une configuration étoile,
- à partir de la troisième vitesse de commutation et au-delà, faire fonctionner la machine de manière à n'alimenter qu'une partie seulement des bobinages de chaque phase, selon une configuration triangle.

L'invention a encore pour objet une installation de levage comportant une machine électrique telle que définie précédemment.

L'invention a également pour but de permettre le passage d'une configuration à une autre en préservant les composants utilisés et sans générer d'à-coup important sur le moteur.

Selon un autre de ses aspects, l'invention a ainsi pour objet une machine comportant un système de contrôle d'un moteur électrique répondant à ce but, le moteur comportant au moins deux éléments de bobinage par phase, ce système de contrôle comportant :
- un premier contacteur comportant un ensemble d'interrupteurs (encore appelés contacts) principaux chacun à relier à un premier et un deuxième éléments de bobinage d'une phase, de telle sorte que lorsque ces interrupteurs principaux sont fermés, les premier et deuxième éléments de bobinage de chaque phase soient reliés en série,
- un deuxième contacteur comportant un ensemble d'interrupteurs principaux permettant, lorsque fermés, au courant circulant dans les phases du moteur de contourner le premier élément de bobinage,
- un comparateur à hystérésis permettant de commander les interrupteurs principaux du premier contacteur en fermeture et ceux du deuxième contacteur en ouverture lorsque la vitesse de rotation du moteur devient inférieure à une vitesse limite basse et de commander les interrupteurs principaux du premier contacteur en ouverture et ceux du deuxième contacteur en fermeture lorsque la vitesse de rotation du moteur devient supérieure à une vitesse limite haute, supérieure à la vitesse limite basse.

Le système de contrôle peut comporter en outre un troisième contacteur permettant d'alimenter sélectivement l'un ou l'autre des premier et deuxième contacteurs de façon à ce que ces derniers ne puissent être fermés tous à la fois.

Le système de contrôle peut être agencé pour détecter lorsque les interrupteurs principaux des premier et deuxième contacteurs sont tous ouverts à la fois.

Le système de contrôle peut comporter un variateur de fréquence comportant une mémoire permettant de stocker au moins un jeu de paramètres de fonctionnement adaptés aux basses vitesses et un jeu de paramètres de fonctionnement adaptés aux hautes vitesses.

Le variateur de fréquence peut être agencé pour remplacer le jeu de paramètres de fonctionnement utilisé pour la régulation de la vitesse aux basses vitesses par l'autre ou inversement suite à l'ouverture simultanée des interrupteurs principaux des premier et deuxième contacteurs.

Les premier et deuxième contacteurs peuvent comporter des interrupteurs auxiliaires agencés de telle sorte que, lorsque les interrupteurs principaux du premier contacteur sont fermés, ceux du deuxième contacteur ne puissent être fermés et inversement.

Ces interrupteurs auxiliaires sont par exemple reliés en série avec des interrupteurs du troisième contacteur.

Les premier, deuxième et troisième contacteurs peuvent être des composants électromécaniques ou électroniques, par exemple à IGBT ou autres semi-conducteurs.

Le terme "interrupteur" ne doit donc pas être compris avec un sens limitatif.

Le système de contrôle peut être agencé pour permettre le passage d'une configuration triangle à une configuration étoile ou inversement.

Par exemple, le moteur peut être initialement dans une configuration étoile où tous les éléments de bobinage sont alimentés, passer ensuite dans une configuration qui reste étoile mais où seule une partie des éléments de bobinage est alimentée, puis dans une configuration où les éléments de bobinage sont alimentés non plus en étoile mais en triangle. Cela peut permettre d'accroître encore la plage de fonctionnement, si nécessaire.

L'invention a encore pour objet un procédé pour faire fonctionner un moteur électrique relié à un système de contrôle comportant un premier contacteur et un deuxième contacteur, le premier contacteur permettant lorsque fermé de relier en série deux éléments de bobinage de chaque phase du moteur, le deuxième contacteur permettant lorsque fermé au courant de contourner l'un des éléments de bobinage de chaque phase, procédé dans lequel :
- lors d'une phase d'accélération du moteur :
   - une fois que la vitesse du moteur devient supérieure à une vitesse limite haute, on continue à entraîner le moteur avec un variateur de fréquence fonctionnant avec un premier jeu de paramètres adaptés aux basses vitesses,
   - on ouvre les premier et deuxième contacteurs,
   - on remplace le jeu de paramètres adaptés aux basses vitesses par un jeu de paramètres adaptés aux hautes vitesses,
   - on laisse le premier contacteur ouvert, et
   - on ferme le deuxième contacteur de sorte que seul l'un des éléments de bobinage soit alimenté,
- lors d'une phase de décélération du moteur :
   - une fois que la vitesse du moteur devient inférieure à une vitesse limite basse, on continue à entraîner le moteur avec le variateur de fréquence fonctionnant avec le jeu de paramètres adaptés aux hautes vitesses,
   - on ouvre les premier et deuxième contacteurs,
   - on remplace le jeu de paramètres adaptés aux hautes vitesses par un jeu de paramètres adaptés aux basses vitesses,
   - on laisse le deuxième contacteur ouvert, et
   - on ferme le premier contacteur de sorte que les deux éléments de bobinage de chaque phase soient alimentés en série.

Ce procédé peut être mis en oeuvre pour passer d'une première configuration à une deuxième configuration telles que définies précédemment.

Selon un autre de ses aspects, l'invention a encore pour objet une machine électrique polyphasée, notamment un moteur triphasé, dont chaque phase comporte seulement deux éléments de bobinage comportant un système de commutation pour commuter, en fonction de la vitesse de rotation et/ou du flux, les éléments constitutifs de bobinage selon l'une au moins des configurations suivantes :
- une première configuration dans laquelle tous les éléments de bobinage sont alimentés en série, pour chaque phase, grâce à un premier interrupteur reliant ces éléments de bobinage à l'état fermé,
- une deuxième configuration dans laquelle une partie seulement des éléments de bobinage est alimentée, pour chaque phase, à partir d'un point intermédiaire situé entre deux éléments consécutifs du bobinage de cette phase, et au moins un deuxième interrupteur entre ce point intermédiaire et une entrée de l'alimentation, ce deuxième interrupteur étant à l'état fermé et le premier interrupteur à l'état ouvert dans cette deuxième configuration, le deuxième interrupteur étant à l'état ouvert dans la première configuration, chaque phase n'étant associée qu'au premier et deuxième interrupteur.

L'invention pourra être mieux comprise à la lecture de la description détaillée qui va suivre, d'exemples de mise en oeuvre non limitatifs de celle-ci, et à l'examen du dessin annexé, sur lequel :
- les figures 1 à 4, précédemment décrites, illustrent l'art antérieur,
- les figures 5 et 6 sont des schémas en blocs d'exemples d'installations équipées d'une machine électrique réalisée conformément à l'invention,
- la figure 7 représente schématiquement un exemple de configuration des éléments de bobinage de la machine,
- la figure 8 est une vue analogue à la figure 7, avec une configuration différente des éléments de bobinage,
- la figure 9 illustre un exemple d'évolution de la puissance en fonction de la vitesse de rotation,
- les figures 10 et 11 illustrent d'autres exemples de configuration des éléments de bobinage,
- la figure 12 illustre l'évolution de la puissance en fonction de la vitesse de rotation dans un autre exemple de mise en oeuvre de l'invention,
- les figures 13 et 14 sont d'autres exemples de configuration des éléments de bobinage,
- la figure 15 est une vue analogue aux figures 5 et 6 d'une variante de réalisation de l'installation de contrôle du moteur,
- la figure 16 représente les éléments de bobinage d'une phase du moteur et les contacteurs associés,
- les figures 17 et 18 représentent des exemples d'agencements des interrupteurs des contacteurs, et
- les figures 19 et 20 sont des schémas en blocs illustrant des exemples de séquences de fonctionnement des contacteurs.

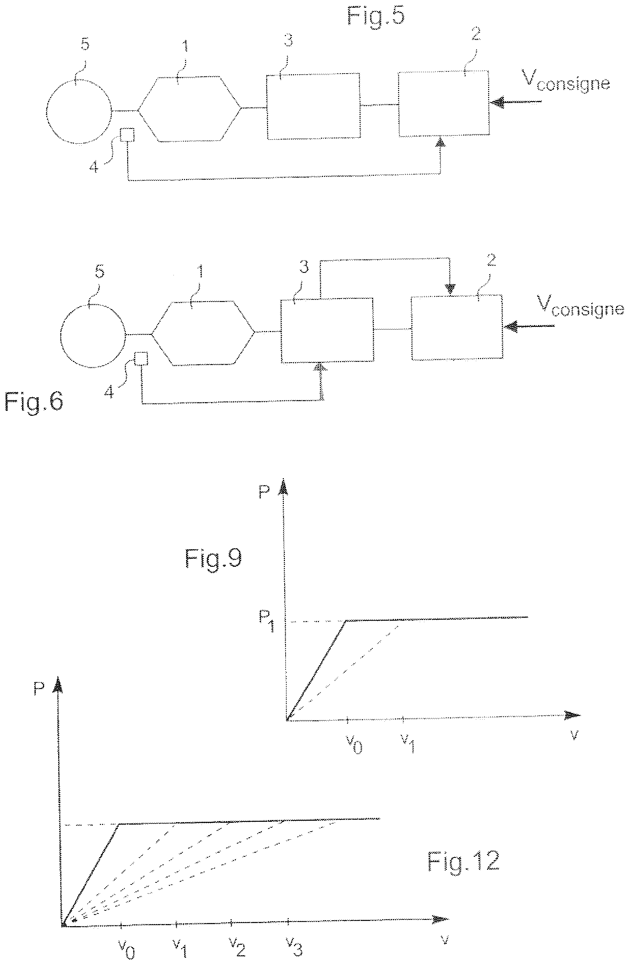

On a représenté à la figure 5 une installation, par exemple de levage, comprenant une machine électrique comportant un moteur 1, par exemple asynchrone, alimenté par un variateur de fréquence 2.

Le stator du moteur 1 comporte dans l'exemple considéré une pluralité d'éléments de bobinage pour chaque phase.

L'installation comporte également un système de commutation 3 qui permet de commuter les différents éléments de bobinage du moteur 1 selon diverses configurations, par exemple en fonction de la vitesse de rotation et/ou du flux.

L'installation peut comporter un capteur 4 de vitesse de rotation du rotor.

Le moteur 1 est par exemple accouplé à un treuil 5 mais peut entraîner, sans que l'on sorte du cadre de la présente invention, tout autre organe mécanique.

Dans l'exemple considéré, le variateur 2 et le système de commutation 3 ont été représentés sous la forme de blocs distincts, et correspondent par exemple à des cartes électroniques distinctes, mais on ne sort pas du cadre de la présente invention lorsque ces éléments sont regroupés au sein d'une même carte électronique.

Le système de commutation 3 peut être déporté ou non, étant par exemple disposé dans une armoire ou boîtier solidaire ou non du moteur 1.

Le capteur 4 a été représenté sur la figure 5 relié au variateur 2 mais on ne sort pas du cadre de la présente invention lorsque c'est le système de commutation 3 qui reçoit des informations en provenance du capteur 4, comme illustré à la figure 6.

Le système de commutation 3 et le variateur 2 peuvent échanger des informations de manière à ce que le variateur 2 connaisse la configuration des éléments de bobinage et puisse commander le moteur 1 en conséquence.

Le variateur 2 peut comporter une mémoire contenant les caractéristiques du moteur 1 selon les différentes configurations des éléments de bobinage pouvant être obtenues grâce au système de commutation 3.

Le variateur 2 peut recevoir une information représentative d'une vitesse de consigne.

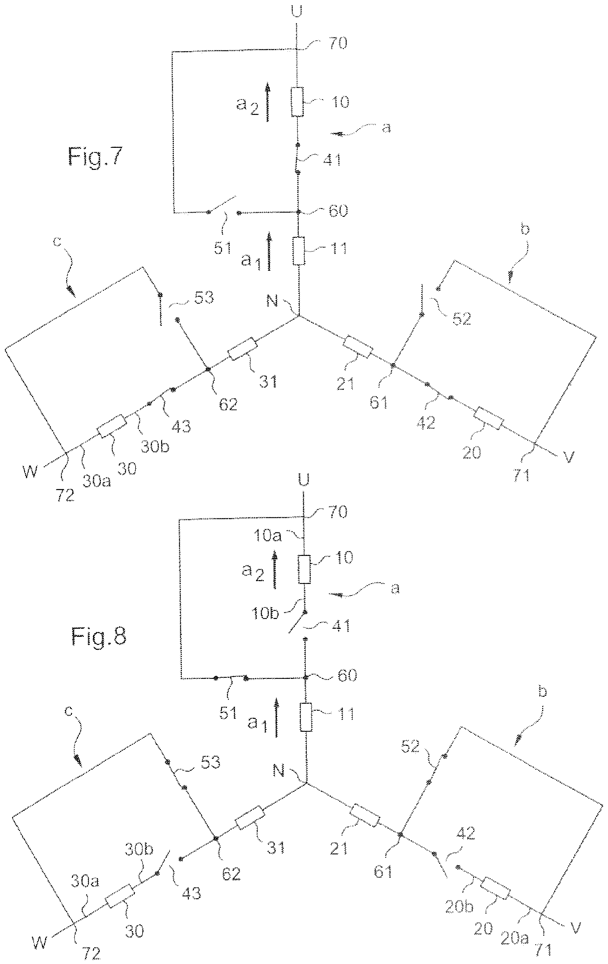

Le moteur 1 présente par exemple trois phases a, b et c, et comporte pour ces phases des éléments de bobinage respectifs 10 et 11, 20 et 21 et 30 et 31, comme illustré à la figure 7.

Le système de commutation 3 comporte par exemple des interrupteurs 41, 51 pour la phase a, 42 et 52 pour la phase b et 43 et 53 pour la phase c. Chaque phase n'est ainsi associée qu'à un premier et deuxième interrupteurs.

Les interrupteurs 41, 42 et 43 sont disposés chacun entre deux éléments de bobinage de la phase correspondante. Les éléments de bobinage 10, 20 et 30 comportent respectivement une borne 10b, 20b et 30b n'étant électriquement relié à rien d'autre qu'à une borne d'un interrupteur 41, 42 et 43 du système de commutation.

Les interrupteurs 51, 52 et 53 sont reliés d'une part à des points intermédiaires respectifs 60, 61 et 62 et d'autre part à des entrées d'alimentation respectives 70, 71 et 72 connectées aux phases U, V et W d'alimentation.

Les interrupteurs 41, 42 et 43 sont reliés respectivement aux points intermédiaires 60, 61 et 62.

Au début du fonctionnement du moteur 1, selon la configuration de la figure 7, la vitesse v peut augmenter, comme illustré sur la figure 9, de 0 jusqu'à une vitesse de base v₀.

Au-delà de la vitesse v₀, la limitation en tension du variateur 2 peut imposer de diminuer le flux de la machine proportionnellement à la vitesse, si l'on cherche un fonctionnement à une puissance sensiblement constante P₁.

Le système de commutation 3 est par exemple agencé de telle sorte que lorsqu'une première vitesse de commutation v₁, qui correspond par exemple sensiblement à deux fois la vitesse de base v₀, est atteinte, le système de commutation passe de la configuration de la figure 7 dans laquelle les interrupteurs 41, 42 et 43 sont fermés et les interrupteurs 51, 52 et 53 ouverts, à la configuration de la figure 8.

Dans cette configuration, les interrupteurs 41, 42 et 43 sont ouverts et les interrupteurs 51, 52 et 53 fermés. Seuls les éléments de bobinage 11, 21 et 31 reliés au point neutre N sont ainsi alimentés. Cela permet d'augmenter le flux et de fonctionner à une puissance sensiblement constante P₁ au-delà de la première vitesse de commutation v₁.

De plus, les éléments de bobinage 10, 20 et 30 sont maintenus par des premières bornes respectives 10a, 20a et 30a aux potentiels d'alimentation U, V et W respectivement et le potentiel à leurs deuxièmes bornes respectives 10b, 20b et 30b est proche de celui du point neutre N, contrairement à l'art antérieur illustré à la figure 2 où la tension induite aux bornes des éléments de bobinage non alimentés s'ajoute à celle des éléments de bobinage alimentés.

Par exemple, pour la phase a, on a au point intermédiaire 60 la tension a₁ par rapport au point neutre N et la borne 10b de l'élément de bobinage est au potentiel a₁-a₂, ce potentiel étant proche de celui du point neutre N. Dans l'art antérieur, la borne U1 non connectée est au potentiel a₁+a₂.

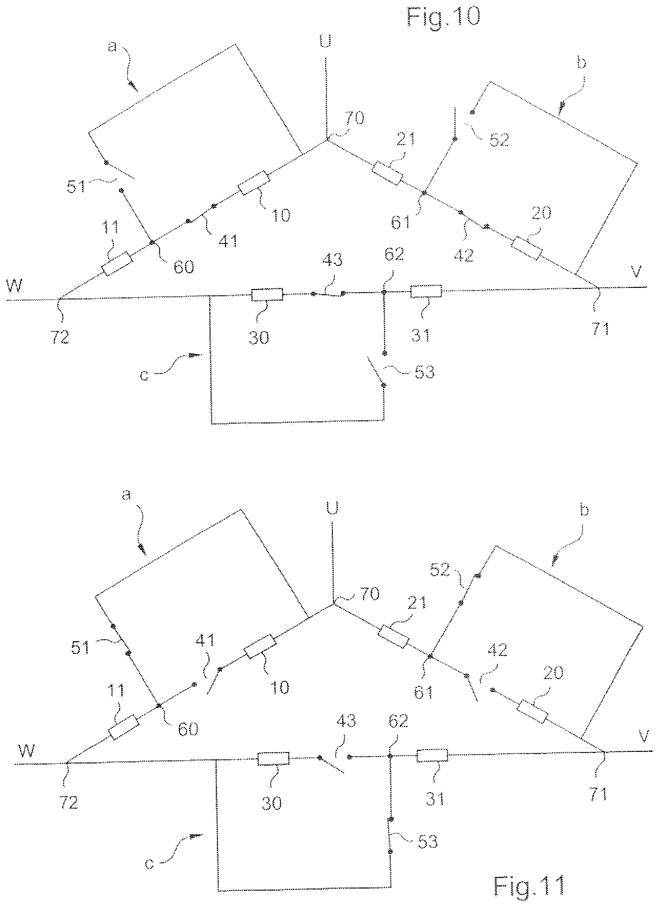

Lorsque l'on souhaite plus de deux plages de fonctionnement à puissance sensiblement constante, comme illustré à la figure 9, on peut par exemple, lorsque la vitesse dépasse la première vitesse de commutation v₁, agencer le système de commutation 3 avec d'autres interrupteurs non représentés de manière à passer de la configuration étoile de la figure 7 à la configuration triangle de la figure 10, dans laquelle les éléments de bobinage de chaque phase sont reliés électriquement en série.

Lorsque la vitesse atteint une deuxième vitesse de commutation v₂, le système de commutation 3 peut être agencé pour commuter les éléments de bobinage selon la configuration de la figure 8 pour fonctionner à puissance sensiblement constante.

Lorsque la vitesse dépasse une troisième vitesse de commutation v₃, le système de commutation 3 peut amener les éléments de bobinage dans la configuration triangle de la figure 11, dans laquelle une partie seulement des éléments de bobinage est alimentée, les interrupteurs 51, 52 et 53 étant fermés et les interrupteurs 41, 42 et 43 ouverts.

On a représenté sur la figure 12 un exemple d'évolution de la puissance en fonction de la vitesse pour chacune des configurations isolément.

Le basculement des interrupteurs peut être simultané ou non pour chacune des phases.

Par exemple, l'interrupteur 41 peut s'ouvrir au moment où l'interrupteur 51 se ferme et inversement. Le basculement peut encore être quasi-simultané.

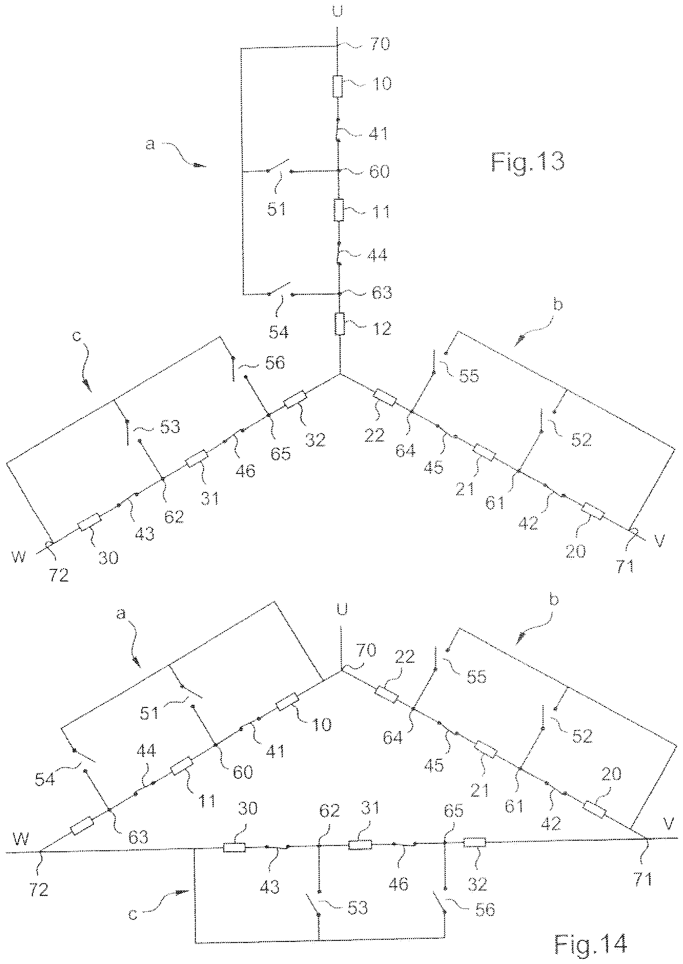

La machine électrique peut comporter plus de deux éléments de bobinage par phase et, à titre d'exemple, on a illustré à la figure 13 une machine électrique qui comporte trois éléments de bobinage par phase, à savoir deux éléments de bobinage 10 et 11 respectivement associés à des interrupteurs 41 et 51 d'une part et 44 et 54 d'autre part et un troisième élément de bobinage 12 pour la phase a, deux éléments de bobinage 20 et 21 respectivement associés à des interrupteurs 42 et 52 d'une part et 45 et 55 d'autre part et un troisième élément de bobinage 22 pour la phase b, et des éléments de bobinage 30 et 31 respectivement associés à des interrupteurs 43 et 53 d'une part et 46 et 56 d'autre part et un troisième élément de bobinage 32, pour la phase c.

Dans l'exemple de la figure 13, les éléments de bobinage sont disposés selon une configuration étoile et dans l'exemple de la figure 14 selon une configuration triangle.

Les différents interrupteurs peuvent être commutés de manière à permettre à la machine de fonctionner dans une première phase de fonctionnement avec tous les éléments de bobinage en série pour chaque phase, et ensuite, lorsque la vitesse augmente, avec une partie seulement d'entre eux alimentés.

Ainsi, dans l'exemple de la figure 13, la machine peut fonctionner dans une deuxième phase de fonctionnement avec les interrupteurs 41, 42 et 43 ouverts et 51, 52 et 53 fermés, les interrupteurs 44, 45 et 46 étant fermés, puis dans une troisième phase de fonctionnement avec les interrupteurs 44, 45 et 46 ouverts et les interrupteurs 54, 55 et 56 fermés.

Dans tous les exemples illustrés, les interrupteurs peuvent être des interrupteurs électromécaniques et/ou à semi-conducteurs. Chaque interrupteur peut par exemple comporter plusieurs composants en série et/ou en parallèle selon la puissance à commuter.

L'invention n'est pas limitée à une installation de levage et s'applique aux machines-outils, à l'enroulage ou au déroulage, à la propulsion, entre autres.

L'invention n'est pas limitée à un fonctionnement à puissance sensiblement constante lorsque la vitesse est supérieure à la vitesse de base. On peut par exemple avoir un fonctionnement avec plusieurs paliers de puissances, la puissance étant sensiblement constante sur chaque palier associé à une plage de vitesses.

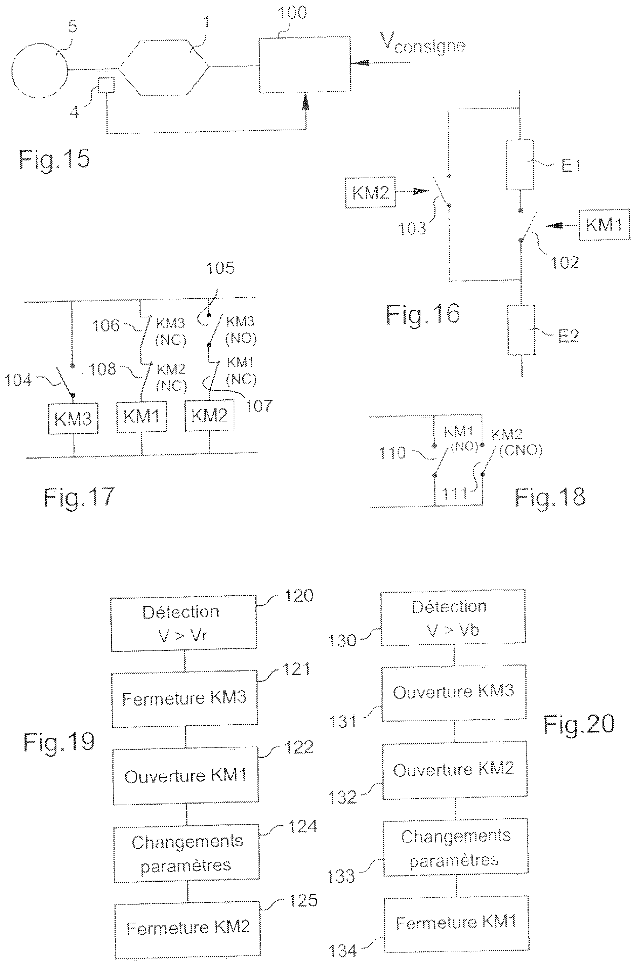

Le passage de la première configuration à la deuxième et inversement peut s'effectuer grâce à un système de contrôle 100 tel qu'illustré à la figure 15, incluant un système de commutation des éléments de bobinage et un variateur de fréquence recevant une information représentative de la vitesse de rotation du moteur, par exemple au moyen d'au moins un capteur 4.

Le système de contrôle 100 peut recevoir une information représentative d'une vitesse de consigne et être embarqué ou non sur le moteur.

Ce dernier comporte par exemple par phase deux éléments de bobinage E1 et E2, comme illustré à la figure 16, les éléments de bobinage de l'ensemble des phases étant agencés en étoile ou triangle.

Les éléments de bobinage E1 et E2 correspondent par exemple respectivement aux éléments de bobinage 10 et 11 de la figure 10 pour la phase a.

Le système de contrôle 100 comporte des premier et deuxième contacteurs KM1 et KM2. Le premier contacteur KM1 comporte un premier ensemble d'interrupteurs principaux 102 et le deuxième contacteur un deuxième ensemble d'interrupteurs principaux 103.

Les interrupteurs principaux 102 et 103 correspondent par exemple respectivement aux interrupteurs 41 et 51 de la figure 10, pour la phase a.

Lorsque le premier contacteur KM1 est non alimenté (ouvert), les interrupteurs principaux 102 sont ouverts.

Lorsque le deuxième contacteur KM2 est non alimenté (ouvert), les interrupteurs principaux 103 sont ouverts.

Le système de contrôle 100 comporte, dans l'exemple considéré, un troisième contacteur KM3 qui est commandé par un interrupteur 104, comme illustré à la figure 17.

Le contacteur KM3 comporte un interrupteur 105 qui est du type normalement ouvert, c'est-à-dire ouvert lorsque le contacteur KM3 est non alimenté, et un interrupteur 106 qui est du type normalement fermé, c'est-à-dire fermé lorsque le contacteur KM3 est non alimenté.

Les contacteurs KM1 et KM2 comportent des interrupteurs auxiliaires 107 et 108 qui sont respectivement reliés électriquement en série avec les interrupteurs 105 et 106 du contacteur KM3, comme on le voit sur la figure 17.

Le contacteur KM1 est alimenté électriquement (fermé) lorsque les interrupteurs 106 et 108 sont fermés, et le contacteur KM2 est alimenté (fermé) lorsque les interrupteurs 105 et 107 sont fermés.

L'interrupteur 107 est du type normalement fermé, c'est-à-dire qu'il est fermé lorsque le contacteur KM1 n'est pas alimenté et l'interrupteur 108 est également du type normalement fermé, étant fermé lorsque le contacteur KM2 n'est pas alimenté.

Des interrupteurs auxiliaires 110 et 111 des contacteurs KM1 et KM2, chacun du type normalement ouvert, sont reliés électriquement en parallèle, ce qui permet au système de contrôle 100 de détecter lorsqu'aucun des contacteurs KM1 et KM2 n'est alimenté électriquement.

Dans cet exemple de réalisation, le système de contrôle 100 comporte un comparateur à hystérésis qui agit sur le fonctionnement des différents contacteurs KM1, KM2 et KM3 selon que la vitesse de rotation du moteur est inférieure ou supérieure à une vitesse limite basse v_{b} et inférieure ou supérieure à une vitesse limite haute vₕ.

Le variateur de fréquence comporte une mémoire où sont stockés des jeux de paramètres de fonctionnement respectivement associés au fonctionnement aux basses vitesses et au fonctionnement aux hautes vitesses.

On suppose dans ce qui suit que le variateur de fréquence fonctionne avec le jeu de paramètres de fonctionnement correspondant aux basses vitesses et que les éléments de bobinage E1 et E2 sont alimentés électriquement en série.

Lors d'une phase d'accélération, comme illustré à la figure 19, le système de contrôle détecte dans une étape 120 que la vitesse de rotation dépasse la vitesse limite haute vₕ.

Le système de contrôle 100 commande alors la fermeture de l'interrupteur 104, ce qui permet l'alimentation du contacteur KM3 à l'étape 121 et l'ouverture de l'interrupteur 106 qui provoque l'arrêt de l'alimentation du contacteur KM1 à l'étape 122.

L'ouverture du contacteur KM1 est détectée par le système de contrôle 100 grâce aux interrupteurs 110 et 111 tous deux ouverts. Le système de contrôle adopte le jeu de paramètres de fonctionnement correspondant aux hautes vitesses à l'étape 124.

Ensuite, à l'étape 125, le contacteur KM2 se ferme du fait que le contacteur KM3 est alimenté et que le contacteur KM1 est ouvert, ce qui a entraîné la fermeture de l'interrupteur 107.

L'élément de bobinage E2 de chaque phase cesse d'être alimenté, l'interrupteur principal 103 étant fermé et l'interrupteur principal 102 ouvert.

Lors d'une phase de décélération, on suppose que le variateur de fréquence fonctionne avec le jeu de paramètres adaptés aux hautes vitesses, que l'interrupteur principal 102 est ouvert et l'interrupteur principal 103 fermé.

Le système de contrôle 100 détecte à l'étape 130 que la vitesse franchit la vitesse limite basse et l'interrupteur 104 s'ouvre quand le contacteur KM3 cesse d'être alimenté à l'étape 131.

Cela provoque le changement d'état des interrupteurs 105 et 106, l'interrupteur 105 s'ouvrant et l'interrupteur 106 se fermant. L'interrupteur 105 s'étant ouvert, le contacteur KM2 cesse d'être alimenté à l'étape 132.

Les contacteurs KM1 et KM2 n'étant pas alimentés, cet état est détecté à l'étape 133 grâce aux interrupteurs 110 et 111 et le variateur de fréquence adopte le jeu de paramètres de fonctionnement adapté aux basses vitesses, à l'étape 133.

Le contacteur KM2 étant non alimenté, l'interrupteur 108 se ferme et le contacteur KM1 est alimenté à l'étape 134, ce qui provoque la fermeture de l'interrupteur principal 102 pour chaque phase, l'interrupteur principal 103 étant ouvert. Les éléments de bobinage E1 et E2 sont reliés électriquement en série.

Les séquences de fonctionnement qui viennent d'être décrites permettent d'éviter la génération d'étincelles au niveau des contacts électriques des interrupteurs, lorsque ceux-ci sont électromécaniques, et de plus le passage de la première configuration à la deuxième configuration et inversement s'effectue sans bruit et sans à-coup sur le moteur.

Dans le cas par exemple d'un moteur comportant deux éléments de bobinage par phase, selon une configuration triangle, la vitesse limite basse est par exemple de 800 tr/mn et la vitesse limite haute de 1790 tr/mn. Le moteur peut fonctionner par exemple à un couple constant de 0 à 750 tr/mn environ, et à puissance constante de 45 kW par exemple, de 750 tr/mn à 3600 tr/mn.

L'invention peut permettre d'utiliser un variateur de fréquence non surdimensionné.

L'expression « comportant un » doit être comprise comme étant synonyme de « comportant au moins un », sauf si le contraire est spécifié.

## Revendications

1. Machine électrique polyphasée, par exemple triphasée, dont chaque phase comporte au moins deux éléments de bobinage, comportant un système de commutation comportant des interrupteurs et agencé pour commuter les éléments constitutifs de bobinage selon l'une des configurations suivantes :
- une première configuration dans laquelle tous les éléments de bobinage sont alimentés en série, pour chaque phase, avec des tensions (a1, a2) aux bornes de ces éléments de bobinage qui s'ajoutent,
- une deuxième configuration dans laquelle pour chaque phase une partie seulement des éléments de bobinage est alimentée, et dans laquelle pour chaque phase au moins un élément de bobinage non alimenté (10 ; 20 ; 30) comporte une première borne (10a ; 20a ; 30a) reliée à au moins un autre élément de bobinage (11 ; 21 ; 31) et une deuxième borne (10b 20b : 30b) non reliée, le potentiel de la deuxième borne étant donné par celui de la première borne auquel est retranchée la tension induite (a2) par cet élément de bobinage non alimenté (10b ; 20b ; 30b), **caracterisé par le fait qu'**au moins un élément de bobinage comporte une borne n'étant électriquement reliée à rien d'autre qu'à une borne d'un interrupteur du système de commutation.

2. Machine selon la revendication 1, **caractérisée par le fait que** la configuration dans laquelle les éléments de bobinage de chaque phase sont reliés en série est une configuration étoile.

3. Machine selon la revendication 1, **caractérisée par le fait que** le système de commutation (3) permet de commuter les éléments de bobinage selon l'une quelconque des configurations suivantes :
- une configuration étoile dans laquelle les éléments de bobinage de chaque phase sont alimentés en série,
- une configuration triangle dans laquelle les éléments de bobinage de chaque phase sont alimentés en série,
- une configuration étoile dans laquelle une partie seulement des éléments de bobinage de chaque phase est alimentée,
- une configuration triangle dans laquelle une partie seulement des éléments de bobinage de chaque phase est alimentée.

4. Machine selon l'une quelconque des revendications précédentes, comportant au moins un point intermédiaire (60 ; 61 ; 62) situé entre deux éléments consécutifs du bobinage d'une phase et au moins un premier interrupteur (41 ; 42 ; 43) entre le point intermédiaire et l'un des éléments de bobinage et au moins un deuxième interrupteur (51 ; 52 ; 53) relié au point intermédiaire et à une entrée (70 ; 71 ; 72) de l'alimentation.

5. Machine selon l'une quelconque des revendications précédentes, **caractérisée par le fait que** chaque phase de la machine électrique comporte exactement deux éléments de bobinage.

6. Machine selon l'une quelconque des revendications précédentes, **caractérisée par le fait que** les éléments de bobinage de chaque phase ont le même nombre de spires.

7. Machine selon l'une quelconque des revendications précédentes, **caractérisée par le fait qu'**elle comporte au moins un capteur (9) permettant d'effectuer une lecture de la vitesse de rotation de son rotor.

8. Machine selon l'une quelconque des revendications précédentes, **caractérisée par le fait qu'**elle est asynchrone.

9. Machine selon l'une quelconque des revendications précédentes, **caractérisée par le fait que** lors de la phase de démarrage, les éléments de bobinage sont agencés en série selon une configuration étoile.

10. Machine selon l'une quelconque des revendications précédentes, étant un moteur électrique comportant un système de contrôle (100) comportant le système de commutation, ce système de contrôle comportant :
- un premier contacteur (KM1) comportant un ensemble d'interrupteurs principaux (102) chacun à relier à un premier et un deuxième éléments de bobinage d'une phase, de telle sorte que lorsque ces interrupteurs principaux sont fermés, les premier et deuxième éléments de bobinage de chaque phase soient reliés en série,
- un deuxième contacteur (KM2) comportant un ensemble d'interrupteurs principaux (103) permettant, lorsque fermés, au courant circulant dans les phases du moteur de contourner le premier élément de bobinage de chaque phase,
- un comparateur à hystérésis permettant de commander les interrupteurs principaux (102) du premier contacteur en fermeture et ceux du deuxième contacteur en ouverture lorsque la vitesse de rotation du moteur devient inférieure à une vitesse limite basse (v_{b}) et de commander les interrupteurs principaux (102) du premier contacteur en ouverture et ceux du deuxième contacteur en fermeture lorsque la vitesse de rotation du moteur devient supérieure à une vitesse limite haute (vₕ), supérieure à la vitesse limite basse.

11. Machine selon la revendication 10, **caractérisée en ce que** le système de contrôle (100) comporte un troisième contacteur (KM3) permettant d'alimenter sélectivement l'un ou l'autre des premier et deuxième contacteurs (KM1, KM2) de façon à ce que ces derniers ne puissent être fermés tous à la fois.

12. Machine selon l'une des revendications 10 et 11, **caractérisée en ce que** le système de contrôle (100) est agencé pour détecter lorsque les interrupteurs principaux (102, 103) des premier et deuxième contacteurs sont tous ouverts à la fois.

13. Machine selon l'une quelconque des revendications 10 à 12, **caractérisée en ce que** le système de contrôle (100) comporte un variateur de fréquence comportant une mémoire permettant de stocker au moins un jeu de paramètres de fonctionnement adaptés aux basses vitesses et un jeu de paramètres de fonctionnement adaptés aux hautes vitesses.

14. Machine selon la revendication 13, **caractérisée en ce que** le variateur de fréquence est agencé pour remplacer un jeu de paramètres de fonctionnement utilisé pour la régulation de la vitesse aux basses vitesses par un autre suite à l'ouverture simultanée des interrupteurs principaux (102, 103) des premier et deuxième contacteurs.

15. Machine selon l'une quelconque des revendications 10 à 14, **caractérisée en ce que** les premier et deuxième contacteurs comportent des interrupteurs auxiliaires agencés de telle sorte que lorsque les interrupteurs principaux du premier contacteur sont fermés, ceux du deuxième contacteur ne puissent être fermés et inversement.

16. Machine selon la revendication précédente, **caractérisée en ce que** les interrupteurs auxiliaires (107, 108) sont reliés en série avec des interrupteurs (105, 106) du troisième contacteur.

17. Machine selon l'une quelconque des revendications 10 à 16, le système de contrôle (100) étant embarqué sur la machine.

18. Machine selon l'une quelconque des revendications 10 à 17, le système de contrôle (100) étant agencé en outre pour permettre le passage d'une configuration triangle à une configuration étoile, ou inversement.

19. Procédé d'alimentation d'une machine telle que définie dans l'une quelconque des revendications précédentes, comportant les étapes consistant à :
- faire d'abord fonctionner la machine jusqu'à une première vitesse de commutation, tous les éléments de bobinage de chaque phase étant alimentés,
- commuter, lorsque la vitesse dépasse la première vitesse de commutation, les éléments de bobinage de manière à n'alimenter qu'une partie seulement des éléments de bobinage pour chaque phase.

20. Procédé selon la revendication 19, comportant les étapes consistant à :
- faire fonctionner la machine jusqu'à une première vitesse de commutation avec les éléments de bobinage reliés électriquement en série selon une configuration étoile,
- commuter, lorsque la vitesse dépasse la première vitesse de commutation, les éléments de bobinage de manière à n'alimenter qu'une partie seulement des éléments de bobinage pour chaque phase.

21. Procédé selon la revendication. 19, comportant les étapes consistant à :
- faire fonctionner la machine jusqu'à une première vitesse de commutation avec les éléments de bobinage de chaque phase reliés électriquement en série selon une configuration étoile et tous alimentés,
- à partir de la première vitesse de commutation et jusqu'à une deuxième vitesse de commutation, faire fonctionner la machine avec les éléments de bobinage reliés électriquement en série selon une configuration triangle,
- à partir de la deuxième vitesse de commutation et jusqu'à une troisième vitesse de commutation, faire fonctionner la machine en alimentant une partie seulement des bobinages par phase, selon une configuration étoile,
- à partir de la troisième vitesse de commutation et au-delà, faire fonctionner la machine de manière à n'alimenter qu'une partie seulement des bobinages de chaque phase, selon une configuration triangle.

22. Procédé selon l'une quelconque des revendications 19à 21, dans lequel la première vitesse de commutation vaut sensiblement le double d'une vitesse de base.

23. Procédé selon l'une quelconque des revendications 19 à 22, dans lequel le flux lorsque la première vitesse de commutation est sur le point d'être atteinte vaut sensiblement la moitié du flux nominal.

24. Procédé selon la revendication 19, la machine étant selon la revendication 10 et comportant un système de contrôle (100) comportant un premier contacteur (KM1) et un deuxième contacteur (KM2), le premier contacteur permettant, lorsque fermé, de relier en série deux éléments de bobinage de chaque phase du moteur, le deuxième contacteur permettant, lorsque fermé, au courant de contourner l'un des éléments de bobinage pour chaque phase, procédé dans lequel :
- lors d'une phase d'accélération du moteur :
- une fois que la vitesse du moteur devient supérieure à la première vitesse de commutation étant une vitesse limite haute, on continue à entraîner le moteur avec un variateur de fréquence fonctionnant avec un premier jeu de paramètres adaptés aux basses vitesses,
- on ouvre les premier (KM1) et deuxième (KM2) contacteurs,
- on remplace le jeu de paramètres adaptés aux basses vitesses par un jeu de paramètres adaptés aux hautes vitesses,
- on laisse le premier contacteur (KM1) ouvert, et
- on ferme le deuxième contacteur (KM2) de sorte que seul l'un des éléments de bobinage soit alimenté,
- lors d'une phase de décélération du moteur :
- une fois que la vitesse du moteur devient inférieure à une vitesse limite basse, on continue à entraîner le moteur avec le variateur de fréquence fonctionnant avec le jeu de paramètres adaptés aux hautes vitesses,
- on ouvre les premier et deuxième contacteurs,
- on remplace le jeu de paramètres adaptés aux hautes vitesses par un jeu de paramètres adaptés aux basses vitesses,
- on laisse le deuxième contacteur (KM2) ouvert, et
- on ferme le premier contacteur (KM1) de sorte que les deux éléments de bobinage de chaque phase soient alimentés en série. phase,

25. Installation de levage comportant une machine électrique telle que définie dans l'une quelconque des revendications précédentes.

## Patentansprüche

1. Elektrische Maschine mit mehreren Phasen, beispielsweise drei Phasen, bei der jede Phase wenigstens zwei Spulenelemente aufweist, mit einem Umschaltsystem, das Schalter aufweist und dazu ausgebildet ist, die konstituierenden Spulenelemente gemäß einer der folgenden Konfigurationen umzuschalten:
- einer ersten Konfiguration, in der alle die Spulenelemente für jede Phase in Serie gespeist werden, mit Spannungen (a1, a2) an Klemmen dieser Spulenelemente, die sich addieren,
- einer zweiten Konfiguration, in der für jede Phase nur ein Teil der Spulenelemente gespeist wird und in der für jede Phase mindestens ein nicht gespeistes Spulenelement (10; 20; 30) eine erste Klemme (10a; 20a; 30a), die mit mindestens einem anderen Spulenelement (11; 21, 31) verbunden ist, und eine nicht verbundene zweite Klemme (10b; 20b; 30b) aufweist, wobei das Potential der zweiten Klemme durch dasjenige der ersten Klemme gegeben ist, von dem die von diesem nicht gespeisten Spulenelement (10b; 20b; 30b) induzierte Spannung (a2) abgezogen wird, **dadurch gekennzeichnet, dass** wenigstens ein Spulenelement eine Klemme aufweist, die ausschließlich mit einer Klemme eines Schalters des Umschaltsystems verbunden ist.

2. Maschine nach Anspruch 1, **dadurch gekennzeichnet, dass** die Konfiguration, in der die Spulenelemente jeder Phase in Reihe verbunden sind, eine Stern-Konfiguration ist.

3. Maschine nach Anspruch 1, **dadurch gekennzeichnet, dass** das Umschaltsystem (3) es erlaubt, die Spulenelemente gemäß irgendeiner der folgenden Konfigurationen umzuschalten:
- einer Stern-Konfiguration, in der die Spulenelemente jeder Phase in Serie gespeist werden,
- einer Dreieckskonfiguration, in der die Spulenelemente jeder Phase in Serie gespeist werden;
- einer Stern-Konfiguration, in der nur ein Teil der Spulenelemente jeder Phase gespeist wird,
- einer Dreieckskonfiguration, in der nur ein Teil der Spulenelemente jeder Phase gespeist wird.

4. Maschine nach einem der vorstehenden Ansprüche, mit wenigstens einem zwischen zwei aufeinanderfolgenden Spulenelementen einer Phase liegenden mittleren Punkt (60; 61; 62) und wenigstens einem ersten Schalter (41; 42; 43) zwischen dem mittleren Punkt und einem der Spulenelemente, und mindestens einem zweiten Schalter (51; 52; 53), der mit dem mittleren Punkt und einem Speise-Eingang (70; 71; 72) verbunden ist.

5. Maschine nach einem der vorstehenden Ansprüche, **dadurch gekennzeichnet, dass** jede Phase der elektrischen Maschine genau zwei Spulenelemente aufweist.

6. Maschine nach einem der vorstehenden Ansprüche, **dadurch gekennzeichnet, dass** die Spulenelemente jeder Phase die gleiche Anzahl von Windungen haben.

7. Maschine nach einem der vorstehenden Ansprüche, **dadurch gekennzeichnet, dass** sie wenigstens einen Messaufnehmer (9) aufweist, der es erlaubt, die Rotationsgeschwindigkeit ihres Rotors zu messen.

8. Maschine nach einem der vorstehenden Ansprüche, **dadurch gekennzeichnet, dass** sie eine Asynchron-Maschine ist.

9. Maschine nach einem der vorstehenden Ansprüche, **dadurch gekennzeichnet, dass** in einer Anlaufphase die Spulenelemente gemäß einer Stern-Konfiguration in Reihe geschaltet sind.

10. Maschine nach einem der vorstehenden Ansprüche, in der Form eines elektrischen Motors mit einem Steuersystem (100), das das Umschaltsystem aufweist, wobei dieses Steuersystem aufweist:
- einen ersten Schütz (KM1) mit einer Gruppe von Hauptschaltern (102), von denen jeder mit einem ersten und einem zweiten Spulenelement einer Phase zu verbinden ist, derart, dass, wenn diese Hauptschalter geschlossen sind, die ersten und zweiten Spulenelemente jeder Phase in Reihe verbunden sind,
- einem zweiten Schütz (KM2), mit einer Gruppe von Hauptschaltern (103), die es im geschlossenen Zustand dem in den Phasen des Motors fließenden Strom erlauben, das erste Spulenelement jeder Phase zu umgehen,
- einen Vergleicher mit Hysterese, der es erlaubt, die Hauptschalter (102) des ersten Schützes zu schließen und diejenigen des zweiten Schützes zu öffnen, wenn die Rotationsgeschwindigkeit des Motors kleiner wird als eine untere Grenzgeschwindigkeit (v_{b}), und die Hauptschalter (102) des ersten Schützes zu öffnen und diejenigen des zweiten Schützes zu schließen, wenn die Rotationsgeschwindigkeit des Motors größer als eine obere Grenzgeschwindigkeit (vₕ) wird, die höher ist als die untere Grenzgeschwindigkeit.

11. Maschine nach Anspruch 10, **dadurch gekennzeichnet, dass** das Steuersystem (100) einen dritten Schütz (KM3) aufweist, der es erlaubt, den einen oder den anderen der ersten und zweiten Schütze (KM1, KM2) selektiv so anzusteuern, dass diese letzteren nicht gleichzeitig geschlossen werden können.

12. Maschine nach einem der Ansprüche 10 und 11, **dadurch gekennzeichnet, dass** das Steuersystem (100) dazu ausgebildet ist, zu erkennen, ob die Hauptschalter (102, 103) der ersten und zweiten Schütze alle gleichzeitig geöffnet sind.

13. Maschine nach einem der Ansprüche 10 bis 12, **dadurch gekennzeichnet, dass** das Steuersystem (100) einen Frequenzwandler aufweist, der einen Speicher hat, der es erlaubt, wenigstens einen Satz von Funktionsparametern zu speichern, die an niedrige Geschwindigkeiten angepasst sind, und wenigstens einen Satz von Funktionsparametern, die an hohe Geschwindigkeiten angepasst sind.

14. Maschine nach Anspruch 13, **dadurch gekennzeichnet, dass** der Frequenzwandler dazu ausgebildet ist, einen Satz von Funktionsparametern, der für die Regelung der Geschwindigkeit bei niedrigen Geschwindigkeiten benutzt wird, im Anschluss an das gleichzeitige Öffnen der Hauptschalter (102, 103) der ersten und zweiten Schütze durch einen anderen zu ersetzen.

15. Maschine nach einem der Ansprüche 10 und 14, **dadurch gekennzeichnet, dass** die ersten und zweiten Schütze Hilfsschalter aufweisen, die so angeordnet sind, dass, wenn die Hauptschalter des ersten Schützes geschlossen sind, diejenigen des zweiten Schützes nicht geöffnet werden können, und umgekehrt.

16. Maschine nach dem vorstehenden Anspruch, **dadurch gekennzeichnet, dass** die Hilfsschalter (107, 108) in Reihe mit Schaltern (105, 106) des dritten Schützes verbunden sind.

17. Maschine nach einem der Ansprüche 10 und 16, bei der das Steuersystem (100) an der Maschine angeordnet ist.

18. Maschine nach einem der Ansprüche 10 und 17, bei der das Steuersystem (100) außerdem dazu ausgebildet ist, den Übergang von einer Dreieckskonfiguration zu einer Stern-Konfiguration oder umgekehrt zu erlauben.

19. Verfahren zum Speisen einer Maschine nach einem der vorstehenden Ansprüche, mit den folgenden Schritten:
- zunächst Betreiben der Maschine bis zu einer ersten Umschaltgeschwindigkeit, wobei alle Spulenelemente jeder Phase gespeist werden,
- wenn die Geschwindigkeit die erste Umschaltgeschwindigkeit übersteigt, Umschalten der Spulenelemente derart, dass nur ein Teil der Spulenelemente für jede Phase gespeist wird.

20. Verfahren nach Anspruch 19, mit den folgenden Schritten:
- Betreiben der Maschine bis zu einer ersten Umschaltgeschwindigkeit mit gemäß einer Stern-Konfiguration elektrisch in Reihe verbundenen Spulenelementen,
- wenn die Geschwindigkeit die erste Umschaltgeschwindigkeit übersteigt, Umschalten der Spulenelemente derart, dass nur ein Teil der Spulenelemente für jede Phase gespeist wird.

21. Verfahren nach Anspruch 19, mit den folgenden Schritten:
- Betreiben der Maschine bis zu einer ersten Umschaltgeschwindigkeit mit sämtlich gespeisten und gemäß einer Stern-Konfiguration elektrisch in Reihe verbundenen Spulenelementen jeder Phase,
- ab der ersten Umschaltgeschwindigkeit und bis zu einer zweiten Umschaltgeschwindigkeit, Betreiben der Maschine mit gemäß einer Dreieckskonfiguration in Reihe elektrisch verbundenen Spulenelementen,
- ab der zweiten Umschaltgeschwindigkeit und bis zu einer dritten Umschaltgeschwindigkeit, Betreiben der Maschine mit Speisung nur eines Teils der Spulenelemente je Phase gemäß einer Stern-Konfiguration,
- ab der vierten Umschaltgeschwindigkeit und jenseits derselben, Betreiben der Maschine derart, dass nur ein Teil der Spulenelemente jeder Phase gemäß einer Dreieckskonfiguration gespeist wird.

22. Verfahren nach einem der Ansprüche 19 bis 21, bei dem die erste Umschaltgeschwindigkeit im wesentlichen das Zweifache einer Basisgeschwindigkeit ist.

23. Verfahren nach einem der Ansprüche 19 bis 22, bei dem der Fluss, bei dem die erste Umschaltgeschwindigkeit erreicht wird, im wesentlichen die Hälfte des nominalen Flusses ist.

24. Verfahren nach Anspruch 19, bei dem die Maschine gemäß Anspruch 10 ausgebildet ist und ein Steuersystem (100) aufweist mit einem ersten Schütz (KM1) und einem zweiten Schütz (KM2), wobei der erste Schütz es im geschlossenen Zustand erlaubt, zwei Spulenelemente jeder Phase des Motors in Reihe zu verbinden, und der zweite Schütz es im geschlossenen Zustand dem Strom erlaubt, eines der Spulenelemente für jede Phase zu umgehen, bei welchem Verfahren:
- während einer Beschleunigungsphase des Motors:
- man, sobald die Geschwindigkeit des Motors größer wird als die erste Umschaltgeschwindigkeit, die eine hohe Grenzgeschwindigkeit ist, fortfährt, den Motor mit einem Frequenzwandler anzutreiben, der mit einem an niedrige Geschwindigkeiten angepassten ersten Satz von Parametern arbeitet,
- man den ersten Schütz (KM1) und den zweiten Schütz (KM2) öffnet,
- man den Satz von Parametern, die an niedrige Geschwindigkeiten angepasst sind, durch einen Satz von Parametern ersetzt, die an hohe Geschwindigkeiten angepasst sind,
- man den ersten Schütz (KM1) offen lässt, und
- man den zweiten Schütz (KM2) schließt, so dass nur eines der Spulenelemente gespeist wird,
- während einer Verzögerungsphase des Motors:
- man, sobald die Geschwindigkeit des Motors kleiner wird als eine untere Grenzgeschwindigkeit, damit fortfährt, den Motor mit einem Frequenzwandler anzutreiben, der mit einem Satz von Parametern arbeitet, die an hohe Geschwindigkeiten angepasst sind,
- man die ersten und zweiten Schütze öffnet,
- man den Satz von Parametern, die an hohe Geschwindigkeiten angepasst sind, durch einen Satz von Parametern ersetzt, die an niedrige Geschwindigkeiten angepasst sind,
- man den zweiten Schütz (KM2) offen lässt und
- man den ersten Schütz (KM1) schließt, so dass die beiden Spulenelemente jeder Phase in Reihe gespeist werden.

25. Hubvorrichtung mit einer elektrischen Maschine nach einem der vorstehenden Ansprüche.

## Claims

1. A polyphase electrical machine, e.g. a three-phase machine, in which each phase comprises at least two winding elements, the machine including a switch system comprising switches and arranged to switch the winding elements into one or the other of the following configurations:
• a first configuration in which all of the winding elements for each phase are powered in series, with the voltages (a₁, a₂) across the terminals of these winding elements adding; and
• a second configuration in which, for each phase, some only of the winding elements are powered, and in which, for each phase, at least one unpowered winding element (10; 20; 30) has a first terminal (10a; 20a; 30a) connected to at least one other winding element (11; 21; 31), and a second terminal (10b; 20b; 30b) that is not connected, the potential of the second terminal being given by that of the first terminal minus the voltage (a₂) induced by said unpowered winding element (10b; 20b; 30b), **characterized in that** at least one winding element has a terminal that is electrically connected to nothing other than a terminal of a switch of the switch system.

2. A machine according to claim 1, **characterized by** the fact that the configuration in which the winding elements of each phase are connected in series is a star configuration.

3. A machine according to claim 1, **characterized by** the fact that the switch system (3) enables the winding elements to be switched into any one of the following configurations:
• a star configuration in which the winding elements of each phase are powered in series;
• a delta configuration in which the winding elements of each phase are powered in series:
• a star configuration in which some only of the winding elements in each phase are powered; and
• a delta configuration in which some only of the winding elements in each phase are powered.

4. A machine according to any one of the preceding claims, including at least one intermediate point (60; 61; 62) situated between two consecutive winding elements of a phase, and at least a first switch (41; 42; 43) between the intermediate point and one of the winding elements, and at least a second switch (51; 52; 53) connected to the intermediate point and to a power supply inlet (70; 71; 72).

5. A machine according to any one of the preceding claims, **characterized by** the fact that each phase of the electrical machine has exactly two winding elements.

6. A machine according to any one of the preceding claims, **characterized by** the fact that the winding elements of each phase have the same number of turns.

7. A machine according to any one of the preceding claims, **characterized by** the fact that it includes at least one sensor (9) enabling the speed of rotation of the rotor to be sensed.

8. A machine according to any one of the preceding claims, **characterized by** the fact that it is asynchronous.

9. A machine according to any one of the preceding claims, **characterized by** the fact that during a starting stage, the winding elements are connected in series in a star configuration.

10. A machine according to any one of the preceding claims, the machine being an electric motor including a control system (100) and the control system comprising the switch system, the control system comprising:
• a first contactor (KM1) having a set of main switches (102) each for connection to a first winding element and to a second winding element of a phase, such that when the main switches are closed, the first and second winding elements of each phase are connected in series;
• a second contactor (KM2) comprising a set of main switches (103) serving, when closed, to allow the current flowing through the phases of the motor to bypass the first winding element in each phase; and
• a hysteresis comparator serving to cause the main switches (102) of the first contactor to close and the main switches of the second contactor to open when the speed of rotation of the motor becomes less than a low limit speed (v_{b}), and for causing the main switches (102) of the first contactor to open and the main switches of the second contactor to close when the speed of rotation of the motor becomes greater than a high limit speed (vₕ) greater than the low limit speed.

11. A machine according to claim 10, **characterized by** the fact that the control system includes a third contactor (KM3) serving to power selectively one or the other of the first and second contactors (KM1, KM2) in such a manner that the contactors (KM1, KM2) cannot all be closed simultaneously.

12. A machine according to one of claims 10 and 11, **characterized by** the fact that the control system is arranged to detect when the main switches (102, 103) of the first and second contactors are all opened simultaneously.

13. A machine according to any one of claims 10 to 12, **characterized by** the fact that the control system (100) includes a variable-frequency controller having a memory serving to store at least a set of operating parameters adapted to low speeds and a set of operating parameters adapted to high speeds.

14. A machine according to claim 13, **characterized by** the fact that the variable-frequency controller is arranged to replace a set of operating parameters used for speed regulation at low speed with another set in the event of the main switches (102, 103) of the first and second contactors opening simultaneously.

15. A machine according to any one of claims 10 to 14, **characterized by** the fact that the first and second contactors have auxiliary switches arranged in such a manner that when the main switches of the first contactor are closed, those of the second contactor cannot be closed, and vice versa.

16. A machine according to the preceding claim, **characterized by** the fact that the auxiliary switches (107, 108) are connected in series with the switches (105, 106) of the third contactor.

17. A machine according to any one of claims 10 to 16, the control system (100) being mounted on board the machine.

18. A machine according to any one of claims 10 to 17, the control system (100) being further arranged to enable changeover from a delta configuration to a star configuration, and vice versa.

19. A method of powering a machine as defined in any one of the preceding claims, the method comprising:
• initially causing the machine to operate up to a first switch-over speed, with all of the winding elements in each phase being powered; and
• when the speed exceeds the first switch-over speed, causing the winding elements to be switched in such a manner as to power some only of the switching elements for each phase.

20. A method according to claim 19, comprising:
• causing the machine to operate up to a first switch-over speed with the winding elements electrically connected in series in a star configuration; and
• when the speed exceeds the first switch-over speed, causing the switching elements to be switched so as to power some only of the winding elements for each phase.

21. A method according to claim 19, comprising:
• causing the machine to operate up to a first switch-over speed with the winding elements of each phase electrically connected in series in a star configuration and all powered;
• from the first switch-over speed and up to a second switch-over speed, causing the machine to operate with the switching elements electrically connected in series in a delta configuration;
• from the second switch-over speed and up to a third switch-over speed, causing the machine to operate while powering some only of the windings per phase, in a star configuration, and
• from the third switch-over speed and above, causing the machine to operate in such a manner as to power some only of the windings of each phase, in a delta configuration.

22. A method according to any one of claims 19 to 21, in which the first switch-over speed is twice a base speed.

23. A method according to any one of claims 19 to 22, in which the flux when the first switch-over speed is about to be reached is half the nominal flux.

24. A method according to claim 19, the machine being in accordance to claim 10 and including a control system (100) comprising a first contactor (KM1) and a second contactor (KM2), the first contactor serving, when closed, to connect two winding elements in series in each phase of the motor, the second contactor serving, when closed, to allow current to bypass one of the winding elements in each phase, in which method:
• while the motor is in a stage of acceleration:
• once the speed of the motor becomes greater than the first switch-over speed being a high limit speed, continuing to drive the motor with a variable-frequency controller operating with a first set of parameters adapted to low speeds;
• opening the first and second contactors (KM1, KM2);
• replacing the set of parameters adapted to low speeds by a set of parameters adapted to high speeds;
• leaving the first contactor (KM1) open; and
• closing the second contactor (KM2) such that only one of the winding elements is powered; and
• during a stage in which the motor is decelerating:
• once the speed of the motor becomes less than a low limit speed, continuing to drive the motor with the variable-frequency controller operating with the set of parameters adapted to high speeds;
• opening the first and second contactors;
• replacing the set of parameters adapted to high speeds by a set of parameters adapted to low speeds;
• leaving the second contactor (KM2) open; and
• closing the first contactor (KM1) in such a manner that both winding elements of each phase are powered in series.

25. A hoist installation including an electrical machine as defined in any one of the preceding claims.
